# EUROPEAN PATENT SPECIFICATION

(11) **EP 3 437 077 B1**
(45) Date of publication and mention of the grant of the patent: **23.03.2022**
(21) Application number: 17724441.5
(22) Date of filing: 29.03.2017
(51) Int. Cl.: G07C 9/00, E05B 19/00, B60R 25/00, G07B 15/00

(54) **SAFETY DEVICE FOR HOLDING AND SHARING A KEY**
SICHERHEITSVORRICHTUNG ZUM HALTEN UND TEILEN EINES SCHLÜSSELS
DISPOSITIF DE SÉCURITÉ POUR CONTENIR ET PARTAGER UNE CLÉ

(30) Priority: 01.04.2016 IT UA20162238; 03.06.2016 IT UA20164075
(43) Date of publication of application: 06.02.2019
(73) Proprietor: Y.SHARE S.r.l., 20122 Milan (IT)
(72) Inventor: TESTA, Andrea, 20900 Monza (MB) (IT); COLLEONI, Margherita, 20133 Milan (IT); ALLI, Giovanni, 20025 Legnano (MI) (IT); SAVARESI, Sergio Matteo, 26100 Cremona (CR) (IT); ODORIZZI, Gianmarco, 38123 Trento (TN) (IT); RUSSI, Vincenzo, 20151 Milan (IT); BONIOLO, Ivo Emanuele Francesco, 20813 Bovisio Masciago (MB) (IT); VENA, Marcello, 20121 Milan (IT); BOTTELLI, Stefano, 21100 Varese (IT)
(74) Representative: Gregorj S.r.l.
(86) International application number: PCT/IB2017/051793
(87) International publication number: WO 2017/168341

(56) References cited:
- EP-A1- 1 808 336
- WO-A1-2009/102194
- DE-A1- 19 854 018
- DE-A1-102005 059 061
- DE-A1-102012 015 925
- US-A1- 2007 273 534
- US-A1- 2009 167 526

## Description

### Technical field of the invention

The object of the present invention is a safety device for holding and sharing keys equipped with a remote control, such as for example the start-up keys of a car provided with a remote control for opening and closing the doors of the car itself, wherein said remote control can operate by means of suitable pushbuttons or by means of proximity detection. In the present description the safekeeping of the start-up keys of a car will be given by way of example, but the safety device according to the invention equally suits the safekeeping of whatever key, wherein such remote control opens or closes a protected environment in general. Note also that the word "key" does not simply indicate a mechanical key, but refers to any general device adapted to open/close and/or to activate additional functions such as for example the vehicle start-up, similar to that of a key, for example an electronic or a magnetic key.

### Prior Art

With reference for example to the automobile industry, the need to share the same car among several users is recently more and more common. This need may arise among a small group of people, such as for example among different members of the same family, or in more structured systems, where the same car can be shared among several users who do not know each other (so-called *car sharing*).

The need to share car keys, necessary to open/close and to start the car itself, therefore arises among a number of people which can be smaller or larger.

In case of a limited number of users who share the same car (for example in a family unit), keys are simply passed from one person to another depending on their need. This system leads to problems because the keys to share can be left by the last user in a place difficult to reach for the next user, or the last user may forget to bring the keys in a place easily accessible to all users, when he last used them.

In some *car sharing* systems instead, keys are normally available inside the vehicle. The car is remotely opened once the user has been identified (typically by means of a special application installed on the user's smartphone). Later, the user enters the vehicle and starts it by the key, remotely authorized to start said vehicle. Therefore, even if a prowler pried the vehicle doors open and attempted to start it by the key, the vehicle would not start, since the start-up has not been remotely authorized.

Such *car sharing* systems require, first of all, *a priori* knowledge of the vehicle that will be shared in order to activate the previously described security functions; secondly, they require a complex installation that can only be performed by a technician capable of interconnecting such systems with the vehicle electronics. For this reason, they are not appropriate in a context of peer-to-peer car sharing, due to the high installation cost on vehicles which are not natively equipped with them.

In addition, *the car sharing* system is naturally designed for a large number of cars and users and, therefore, it cannot be reasonably applied to a limited context such as a family, since numerous adaptations to the vehicle are necessary, as well as a complex information system for the operational, administrative, accounting, maintenance management of the sharing and of the shared vehicles.

More generally, there is a current need to share keys safely. For example, in case of deficiency of sets of keys, equipped for example with a remote control for the activation and deactivation of a home security system, and whose number can be enough for a whole family unit, sometimes the available keys are left in places accessible to anyone (such as under doormats), with the risk that some prowler may grab them.

Moreover, the large number of companies and *home sharing* management sites for townhouses and holiday homes creates a growing need to share keys safely and remotely, i.e. without a physical meeting of the people involved.

A safety device for safekeeping keys, equipped with a remote control, is described in documents DE 10 2005 059061 A1, DE 198 54 018 A1, EP 1 808 336 A1, DE 10 2012 015925 A1 and US 2007/273534 A1.

### Brief summary of the invention

The underlying problem of the present invention is therefore to make available a safety device, which allows only authorized users to hold, make available and act on keys equipped with a remote control, which may easily be used among limited groups of persons, but which guarantees such security levels that it may be used even in larger groups of persons and with no relationship between them, such as *car-sharing, bike sharing, boat sharing or home sharing* systems.

This and other objects are achieved by means of a safety device according to claims 1, 2 and 3.

The dependent claims define possible advantageous embodiments of the invention.

The device according to the invention ensures good safety, is not limited to the scope (then in case it is used for holding vehicle start-up keys, it does not depend on the vehicle model and/or its equipment) and is easy to install and to use for the user.

### Brief description of the figures

To better understand the invention and appreciate its advantages, some of its nonlimiting exemplary embodiments will be described below, referring to the attached figures, wherein:

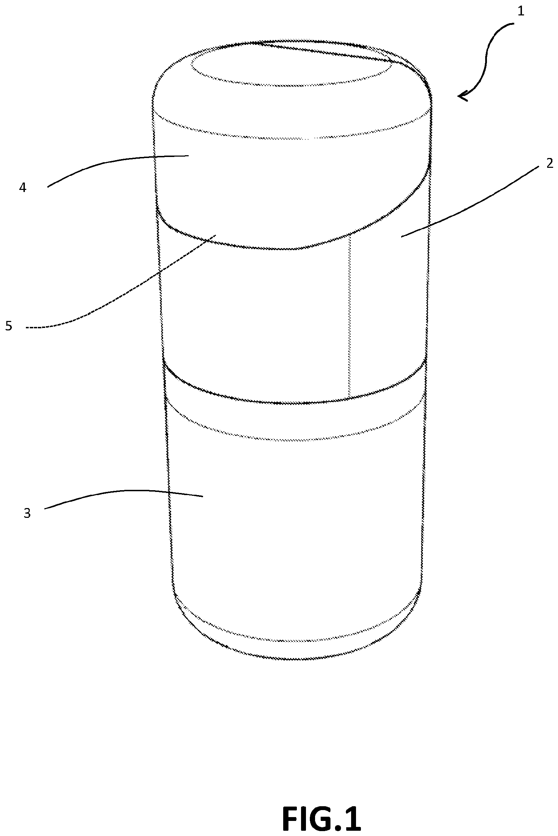

Figure 1 is a perspective view of a safety device not part of the present invention;
Figure 2 is an exploded view of safety device in figure 1;
Figure 3 is a perspective view of an internal portion of the device in figure 1;
Figure 4 is an exploded view of the safety device portion, including a key, in figure 3;
Figures 5a and 5b are two side views of a leverage mechanism of the safety device which actuates the opening and closing pushbuttons of a key;
Figure 6 is a schematic illustration of a system for holding and sharing among a plurality of users a key, comprising a safety device, according to a possible embodiment of the invention;
Figure 7 is a schematic illustration of a system for holding and sharing a key among a plurality of users, comprising a safety device according to a further possible embodiment of the invention;
Figures 8a and 8b are two front views of a Faraday cage of a safety device, according to a further possible alternative embodiment of the invention;
Figures 9a-9c are schematic illustrations of a portion of a safety device not part of the present invention;
Figures 10a-10b are schematic illustrations of a portion of a safety device not part of the present invention;
Figure 11 is a schematic illustration of a portion of the safety device according to a further possible embodiment of the invention;
Figures 12a-12b are schematic illustrations of the safety device according to a further possible embodiment of the invention;
Figure 13 is a schematic illustration of a portion of a safety device not part of the present invention;
Figures 14a-14b are schematic illustrations of a portion of a safety device not part of the present invention;
Figures 15a-15d are perspective and section views of the safety device according to a further possible embodiment of the invention;
Figure 16 is a diagram illustrating the correlation between the angular position of the actuation system and the configuration of parts of the safety device in figures 15a-15d.

### Description of the embodiments

With reference to the attached figures, a safety device is indicated as a whole with reference 1. Safety device 1 is intended to hold and to share a key 100, as explained in the introductory part of the present description. With reference, by way of example, to a common key 100 of a car, it comprises a portion 101, used for starting the vehicle, which may for example be a shaped metal portion adapted to be inserted in a corresponding start-up socket on the dashboard of the vehicle itself, and a remote control 102, for example a radio control, for opening and closing the vehicle. The remote control 102 comprises an opening pushbutton 103 and a closing pushbutton 104 and, actuating them, the user can open or close the vehicle locks, electrically operated by the control unit of the vehicle itself. The opening 103 and closing 104 pushbuttons may be physically separated or distinct parts of the same pushbutton.

Note that, alternatively, the remote control 102 may not be equipped with the opening 103 and closing 104 pushbuttons and the opening/closing of the doors (and in case also the vehicle start-up authorization, for example, by unlocking the immobilizer system of the vehicle itself, which can be started, for example, by means of a button of the vehicle itself) may be based on the proximity detection of the key to the place to open/close, or alternatively the remote control 102 may further comprise the opening 103 and closing 104 pushbuttons, but it may be adapted to authorize the vehicle start-up, following the above methods by means of proximity detection. Such keys are commonly called *keyless* keys. With reference to a car, the car locks are opened and/or the vehicle start-up is authorized, when the key is close to the car itself, and are closed and/or the vehicle start-up is inhibited, when the key gets adequately far from the car. Such systems may be based, for example, on a RFID transmitter integrated in the remote control of the key, which communicates with a corresponding receiver integrated in the vehicle.

Safety device 1 is generally intended to hold the key 100, whatever its nature, allowing access to authorized users only.

Safety device 1 comprises an external housing 2 which defines an inner space wherein the key 100 is held. The external housing may be configured according to a closed configuration and to an open configuration. In the closed configuration it is not possible to access the inner space of the external housing 2, while in the open configuration such an access is possible, and therefore the user can insert and remove the key 100 into/from safety device 1. According to a possible embodiment, the external housing 2 comprises a first 3 and a second 4 half-shells separable from each other, for example by pressing, snapping or relative screwing. When the first 3 and the second 4 half-shells are joined, the external housing 2 is in the closed configuration, while, when the first 3 and the second 4 half-shells are separated, the external housing 2 is in the open configuration. Of course, alternative configurations of the external housing 2 are possible. For example, the first 3 and the second 4 half-shells may be hinged together and not separable.

Safety device 1 further comprises locking means, such as for example a lock 5, preferably electrically controlled, controllable to switch between a closed status and an open status. In the closed status, lock 5 prevents the external housing 2, when it is in the closed configuration, from switching into the open configuration. On the contrary, in the open status, the lock 5 allows the external housing to switch between the open and the closed configurations. Therefore, if the key 100 is in the external housing 2 in the closed configuration and with the lock 5 in the closed status, it will impossible for the user to have access to the key until lock 5 switches into the open status. With reference to the possible above-described embodiment of the external housing 2, the lock 5, in the closed status, acts on the first 3 and on the second 4 half-shells in such a way that it is not possible to separate them.

Safety device 1 can differently be configured depending on the key type to hold.

In accordance with a possible embodiment, in case the key to hold is with remote control provided with opening and closing pushbuttons, safety device 1 comprises an actuation system 6, operable to activate, by mechanical pressure, the opening 103 and closing 104 pushbuttons of the remote control 102 of the key 100, when said key is inside the external housing 2 in the closed configuration. In particular, according to a possible embodiment, the actuation system 6 comprises one or more actuators intended to actuate the opening 103 and the closing 104 pushbuttons of the key 100. The actuators can be of different types. For example, they may include: gear motors, linear actuators, piezoelectric actuators, magnetic actuators, solenoid actuators, electro-hydraulic actuators, electro-pneumatic actuators. The actuation system 6 can act on the opening 103 and closing 104 pushbuttons either directly or through a leverage mechanism 9. In addition, the actuation system 6 and/or the leverage mechanism 9 may be fixedly linked to the external housing 2 or may be movable to take different positions with respect to the external housing 2, for example by means of a sledge system, so that the device may be adapted to different types of keys, wherein the opening 103 and closing 104 pushbuttons are in different positions. In case the actuation system 6 is fixedly linked to the external housing 2, safety device 1 may comprise an adapting device 10 configured in such a way that the actuators may act on the opening 103 and closing 104 pushbuttons of controls via the adapting device 10 itself. Preferably, the adapting device 10 may comprise an internal housing 11 that may be removably housed inside the external housing 2 and suitable to surround at least partially the remote control 102 of the key 100. Said internal housing 11 may comprise the previously-mentioned leverage mechanism 9, which in turn is configured to actuate the opening 103 and closing 104 pushbuttons of predefined key types. Thus it is possible to use safety device 1 with different types of keys. In fact, it's just necessary to replace the adapting device, suitable for a key type, with another suitable for a different key type. Alternatively, the internal housing may not have a leverage mechanism and the actuation system may be linked and not linked to the internal housing so that it acts directly on the key to which the internal housing has been adapted.

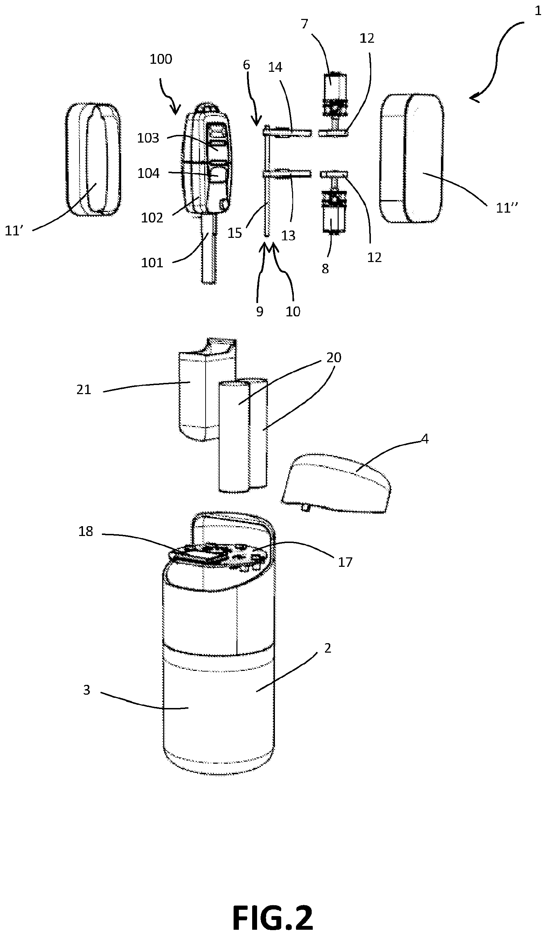

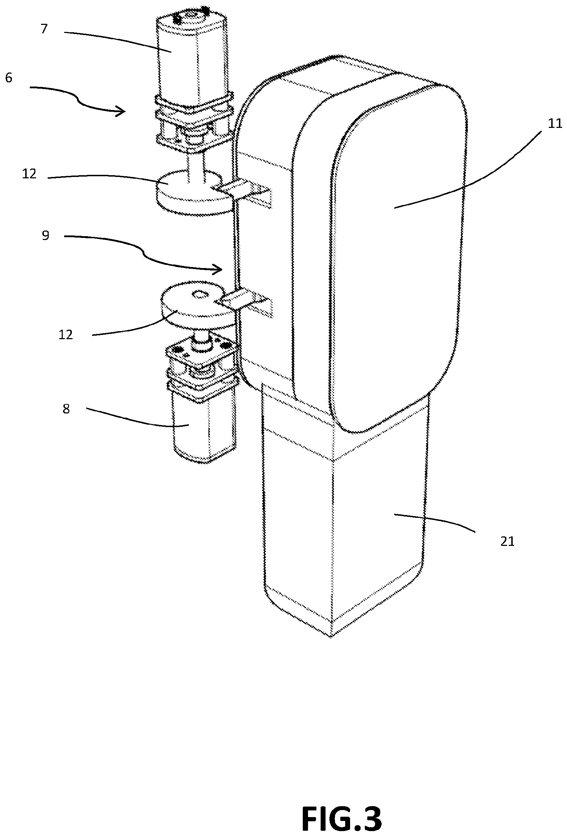

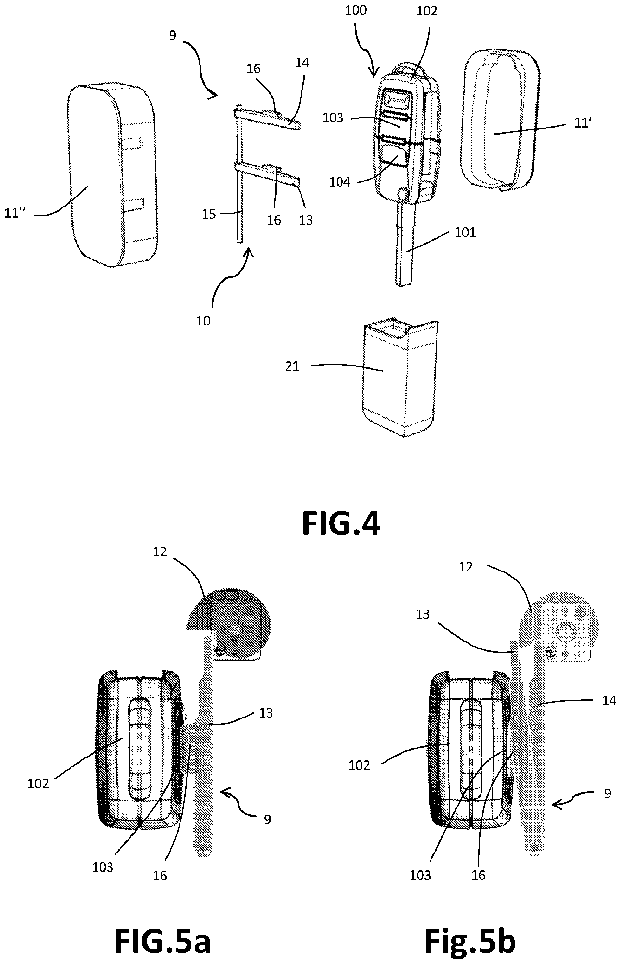

With reference to figures 2-5, they represent a device 1 not part of the present invention. According to said example, the actuation system 6 comprises a first 7 and a second 8 actuators, preferably rotary. Each actuator comprises a shaft with a cam 12 fixed at its end. The cam may have for example a helical profile, i.e. a gradually increasing radius. The profile generates a step in correspondence to the rise between the starting point and the end point of the helix. The leverage mechanism 9 comprises a first 13 and a second 14 leverages, each connected in a rotary manner at one end to a fixed axis 15, in particular fixedly linked to the internal housing 13. The opposite end of each leverage 13, 14 is free and shaped in such a way as to interact with its respective cam 12. As a result of said rotation, each leverage oscillates around the fixed axis 15 between a disengaged position (corresponding to the helix portion of the cam 12 with smaller radius, figure 5a) and an engaged position (corresponding to the helix portion of the cam 12 with larger radius, figure 5b), in such a way that its middle portion 16, preferably protruding, presses the respective opening 103 or closing 104 pushbuttons, as the leverage gradually reaches the engaged position. At the end of a complete rotation of 360° of the cam, the leverage reaches the previously mentioned step of the cam 12 itself and thus returns to the disengaged position, so that the middle protruding portion 16 drifts apart from the pushbutton, while releasing it. In order to ensure that, in this case, the leverage goes back to the disengaged position, suitable elastic means may be provided, which push each leverage towards its respective disengaged position. As shown for example in Figure 3, the leverage mechanism 9 and in particular the leverages 13 and 14 are fixedly linked to the internal housing 11, which, according to the illustrated embodiment, comprises a first 11' and a second 11" portions, separable and connectable between them, so that the internal housing 11 may hold, at least partially in itself, the remote control 102 of the key 100 (figure 4). The first 7 and the second 8 actuators with their respective cams 12 are instead fixedly linked to the external housing 2. According to the illustrated embodiment, the key 100 portion inserted to start the car 101 may be held inside a fixed place 21 inside the external housing 2. Such a fixed place 21 preferably has a different shape, depending on the key type to hold into safety device 1.

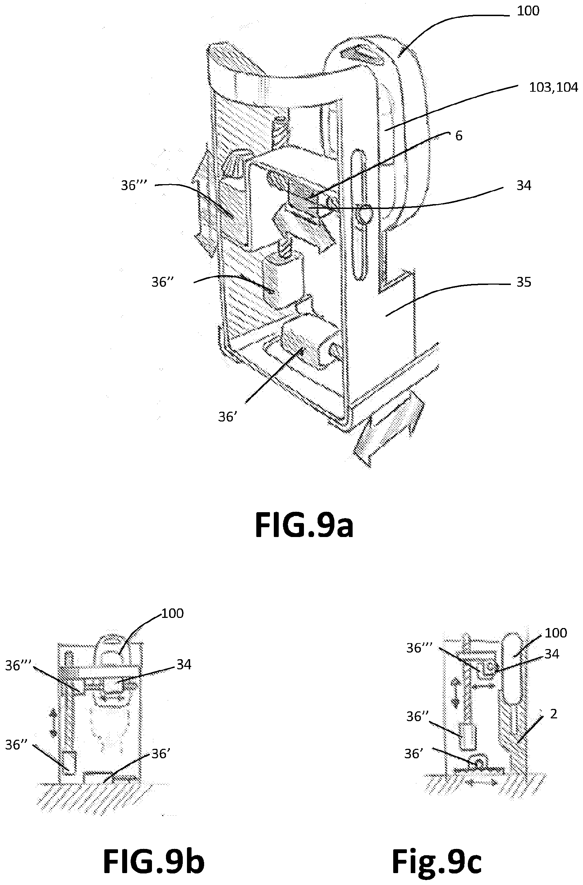

In accordance with an embodiment not part of the invention (figures 9a-9c), the actuation system 6 is movably linked to the external housing 2 and acts directly on the opening 103 and closing 104 pushbuttons of the key 100. Preferably, the actuation system 6 comprises a single actuator 34, moved by a motorized sledge structure 35, that moves the single actuator 34 along one or two or three axes. The motorized sledge structure 35 is preferably linked to the external housing 2 and comprises, according to the three-axis movable variant, three motion actuators 36', 36", 36'" which move the sole actuator 34 into a suitable position to press the opening 103 or closing 104 pushbuttons of the key 100, depending on the requested function. Key 100 is in a fixed position inside the external housing 2. According to this variant the actuation system 6 finds a proper position with respect to the key 100 depending on the key shape. The motorized positioning may occur, following the manual instructions given by the user or automatically, based on the coded characteristics of the key 100.

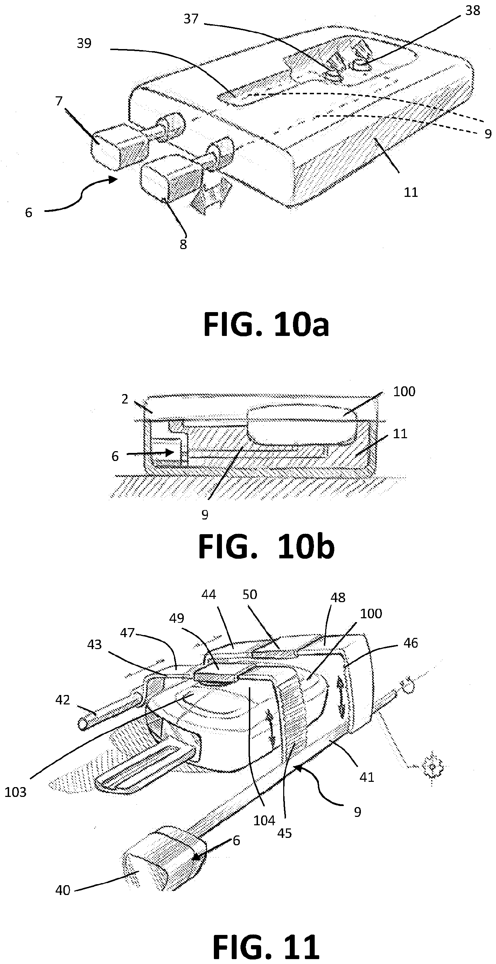

In accordance with a further example not part of the invention (figures 10a-10b), the actuation system 6 is fixedly linked to the external housing 2 and acts by means of a leverage mechanism 9 on the opening 103 and closing 104 pushbuttons of the key 100. The leverage mechanism 9 is held into an internal housing 11 adapted to hold the key, removable from external housing 2. The internal housing 11 is shaped in such a way as to be reversibly connectable to the actuation system 6, so that, once it is connected with the latter, the leverage mechanism 9 is connected with the actuation system 6 too. Preferably, the actuation system 6 comprises a first 7 and a second 8 actuators, connectable via the leverage mechanism 9 to a first 37 and a second 38 small pistons, adapted to respectively act on the opening 103 and closing 104 pushbuttons of the key 100, which is preferably held into a shaped place 39 of the internal housing 11 itself. According to this embodiment, it is possible to simply replace the internal housing 11 depending on the key 100 shape in order to adapt device 1 to the key itself. When the internal housing 11 is replaced, the actuation system 6, linked to the external housing 2, should be reconnected every time with the internal housing 11, equipped, as previously mentioned, with a suitable leverage mechanism 9.

In accordance with a possible embodiment (figure 11), the actuation system 6 is fixedly linked to the external housing 2 and acts via a leverage mechanism 9 on the opening 103 and closing 104 pushbuttons of the key 100, which is held in a fixed position in the external housing 2 of device 1. The leverage mechanism 9 is positioned into the external housing 2 and can be movable and configurable with respect to the latter, following different configurations, based on the characteristics of the key 100. The actuation system 6 comprises a single actuator 40, fixedly positioned with respect to the external housing 2, which rotates an actuator shaft 41. The leverage mechanism 9 comprises a rotating shaft 42 fixedly linked to the external housing 2 and parallel to the actuator shaft 41. The leverage mechanism 9 further comprises a first 43 and a second 44 leverages, rotating around the rotating shaft 42 and sliding along the same. At the opposite end, the first 43 and second 44 leverages comprise racks 45 and 46 which engage a cogged portion of the actuator shaft 41 on two opposite sides. So, as the latter, driven by the sole actuator 40, rotates in a predefined direction, the first 43 and the second 44 leverages rotate in opposite directions around the rotating shaft 42, approaching/moving away from the key 100. Preferably, each leverage 43, 44 comprises a transverse portion 47,48 positioned between the actuator shaft 41 and the rotating shaft 42 and the touch probes 49, 50 which can slide with respect to the transverse portions 47, 48, so that they can be set in the correct position with respect to the opening 103 and closing 104 pushbuttons of the key 100. In this way, the touch probes 49, 50 are moved by the transverse portions 47, 48 of the leverages 43, 44. The positioning of the leverages 43,44 with respect to the rotating shaft 42 and the positioning of the touch probes 49, 50 with respect to the transverse portions 47, 48 of the leverages 43, 44 can be manually done by the user, who is then able to adapt the device to any key type.

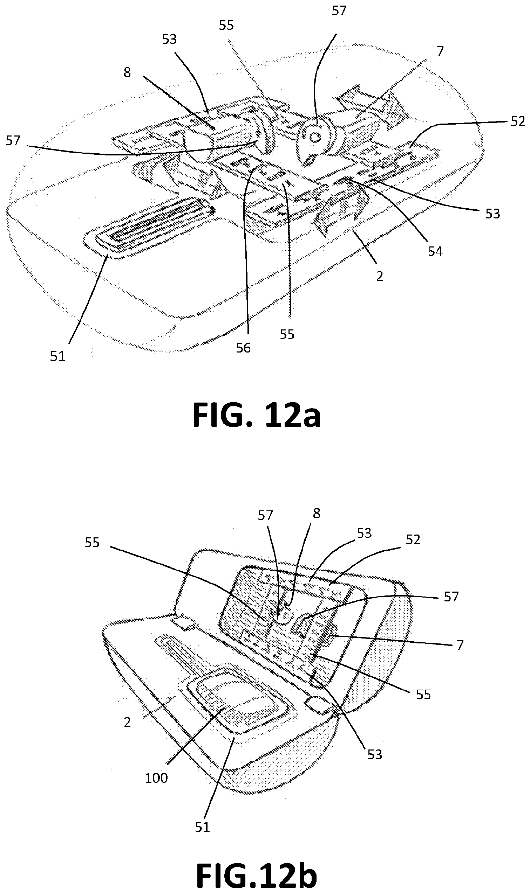

In accordance with a further possible embodiment (figures 12a-12b), the actuation system 6 is removably linked to the external housing 2 and acts directly on the opening 103 and closing 104 pushbuttons of key 100, which is held in a fixed position inside the device, in particular in a place 51 of the external housing 2. The actuation system 6 comprises a first 7 and a second 8 actuators removably linked to a support structure 52, fixedly linked to the external housing 2. The support structure 52 comprises two opposite uprights 53, provided with first notches, 54 and two crosspieces 55, provided with second notches 56. The two crosspieces 55 are removably linked to the two uprights 53, in correspondence to the different positions defined by the first notches 54, while the first 7 and the second 8 actuators are removably linked respectively to one of the crosspieces 55, in correspondence to the positions defined by the second notches 56. In this way, it is possible to set the actuators 7 and 8 in different positions depending on the key type, so that each may respectively act on the opening 103 or closing 104 pushbuttons of key 100. Preferably, each actuator comprises a cam 57, which turns around the axis of its respective actuator. The cams 57 have a helical profile, so that, as a consequence of the rotation, they can alternately press and release the opening and closing pushbuttons of the key. Device 1 according to this embodiment may suit any key type with no need to replace any of its parts.

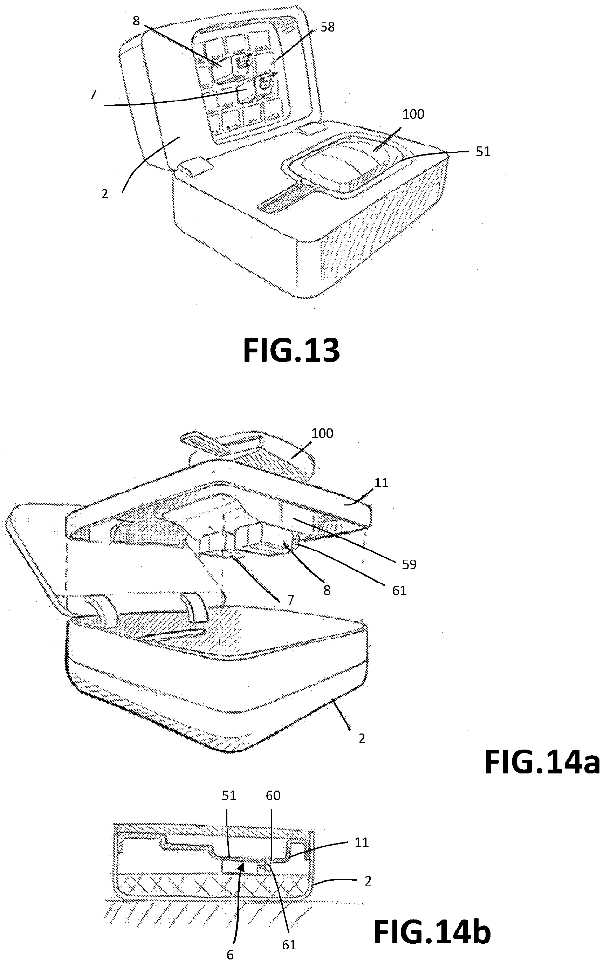

In accordance with an embodiment not part of the invention (Figure 13), the actuation system 6 is removably linked to the external housing 2 and acts directly on the opening 103 and closing 104 pushbuttons of the key 100, which is held in fixed position in the device, in particular in a place 51 of the external housing 2. Preferably, the actuation system 6 comprises a first 7 and a second 8 actuators removably linked to several actuator housings 58 arranged in a matrix in the external housing 2. A coordinate corresponds to each actuator housing 58. In this way it is possible to set the actuators 7 and 8 in different positions depending on the key type, so that each acts respectively on the opening 103 or closing 104 pushbuttons of the key 100. Each actuator preferably acts with linear motion on the opening or closing pushbuttons of the key 100. Device 1 according to this embodiment may be suited to any key type with no need to replace any of its parts.

In accordance with anembodiment not part of the invention (figures 14a-14b), the actuation system 6 is removably linked to an internal housing 11, removable from the external housing 2 and shaped to hold the key 100 in a place 51. Said system acts directly on the opening 103 and closing 104 pushbuttons of the key 100. The internal housing 11 is shaped in such a way that the actuation system 6 is reversibly connectable to it. Preferably, the actuation system 6 comprises a first 7 and a second 8 actuators, which act directly on the opening 103 and closing 104 pushbuttons of key 100, for example by means of a cam mechanism 61 or by means of a linear mechanism, as the ones previously described. For example, the actuators 7 and 8 may be linked to the internal housing 11 in correspondence to a bottom wall 59 of the external housing 11 itself in the opposite direction of place 51, which holds the key 100. The bottom wall 59 may comprise some outlet openings 60 which connect the actuators 7, 8 with the place 51, where the key 100 is held. According to this embodiment, it is possible to adapt device 1 to a specific key simply replacing the internal housing 11, which should have a specific place for the key and which should be configured so that the removable actuators are set in a proper position for acting on the opening 103 and closing 104 pushbuttons. The actuators themselves are therefore connected and disconnected with different internal housings depending on the key type held in the device.

In accordance with a further possible embodiment, if the key to hold is *keyless* type, safety device 1 comprises a Faraday cage 30 suitable for containing the key itself. Such a Faraday cage 30 is configurable according to a shielded configuration and a non-shielded configuration. In the shielded configuration, the *keyless* key is unable to signal its presence and therefore, referring to the car example, the latter will not open and will not start even when safety device 1, with the key inside, is into the car itself. Conversely, when the Faraday cage 30 is in the non-shielded configuration, the key may signal its presence and therefore it will be possible to open and start the car by the key itself, held inside the device in the vehicle itself.

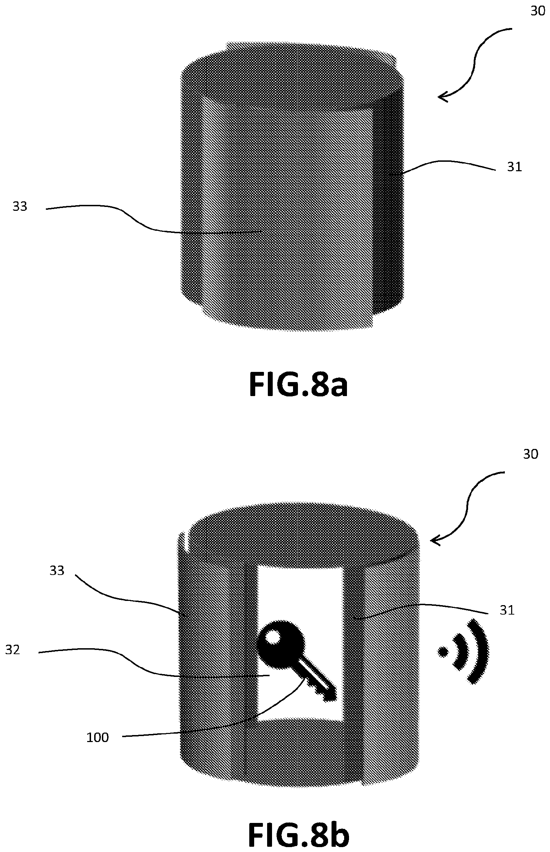

In accordance with the embodiment illustrated in Figures 8a and 8b, the Faraday cage 30 comprises a first hollow body 31, adapted to hold the key 100 and having at least one side opening 32, and a second body 33, movable with respect to the first body 31. For example, the second body 33 laterally slides and moves along the external sides of the first body 31. Both the bodies 31 and 33 make a shield through their portions of the Faraday cage 30. The second body 33 moves between a closing position (Figure 8a), wherein it occludes the side opening 32 of the first body 31, and an opening position, wherein instead the side opening 32 of the first body 31 is clear. When the second body 33 is in the opening position, the Faraday cage is in the non-shielded configuration, while, when the second body is in the closing position, the Faraday cage 30 is in the shielded configuration.

Note that, advantageously, the Faraday cage 30 is positioned in a such a way that it does not interfere with, and in particular does not shield, the transmission unit of safety device 1 in any of its configurations.

The movement of the second body 33, with respect to the first body 31, may be implemented, for example, by means of an actuator, controlled by the command and control unit of device 1.

The Faraday cage 30 may, for example, be associated with the internal housing 11 of the safety device 1.

Note also that, if the *keyless* key is itself provided with opening and closing pushbuttons, safety device 1 comprises, advantageously, both the Faraday cage 30 (for shielding the proximity detection authorizing the start-up of the vehicle) and the actuation system 6 for acting on the opening and closing pushbuttons.

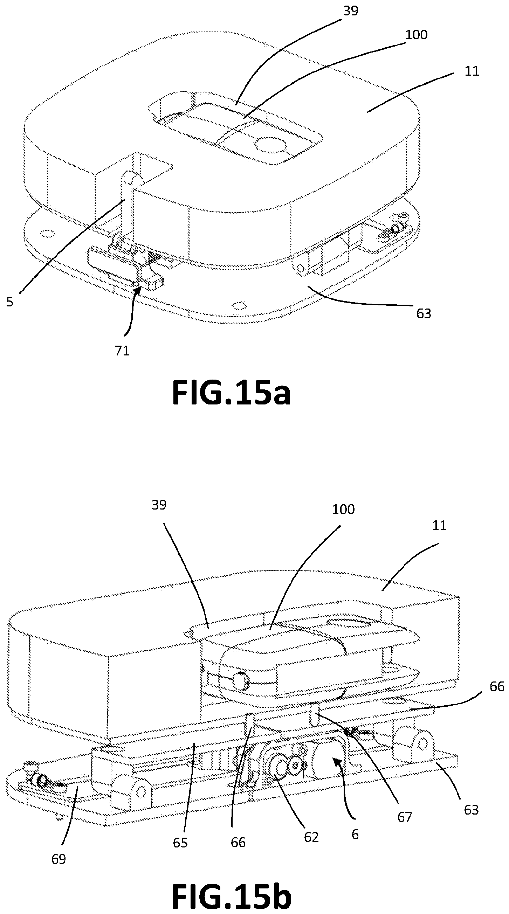

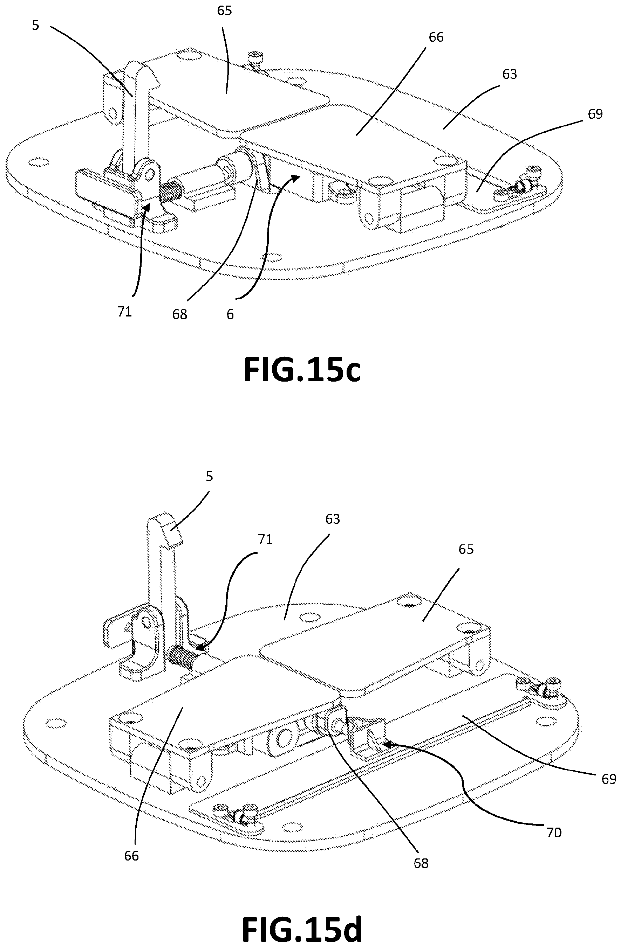

In accordance with a further possible embodiment (figures 15a-15d), the actuation system 6 comprises a single actuator and a transmission 62, comprising for example several interconnected cogwheels, fixedly arranged on a support plate 63, fixedly linked to the external housing 2 or to a part of it. The transmission 62 is connected to a cam 68 suitable for interacting with a first palette 65 and a second palette 66, connected in a rotary manner with respect to the support plate 63. In particular, the transmission 62 is configured so that, when the single actuator rotates following a first direction, the cam 68 acts on the first palette 64, while, when the single actuator rotates following a second direction opposite to the first, the cam 68 acts on the second palette 66. An internal housing 11, adapted to receive in a place 39 the key 100, removable from the external housing 2, comprises a first 66 and second 67 pivots adapted to act on the opening and closing pushbuttons of the key, said pivots respectively moved by the first 64 and the second 65 palettes. The pivots 66 and 67 are in particular movable along a bottom wall of the housing 11 so as to have access to the place 39. In this way, depending on the rotation direction of the sole actuator, either the first pivot 66 acts on one of the opening/closing pushbuttons of the key, or the second pivot 67 acts on the other opening/closing pushbutton of the key. Note that the described embodiment functionally corresponds to the variant described with reference to figures 10a-10b, wherein the first 66 and the second 67 pivots implement the leverage mechanism 9 in the internal housing 11. Even according to this embodiment, it is possible to simply replace the internal housing 11, with pivots 66 and 67 properly arranged based on the key 100 shape, for adapting device 1 to the key itself. When the internal housing 11 is replaced, the first 64 and the second 65 palettes interact with pivots 66 and 67, properly positioned with respect to the key.

Always referring to figures 15a-15d, according to a further possible variant, the support plate 63 implements a portion of the previously-mentioned Faraday cage. In particular, the support plate 63 implements the Faraday cage together with the external housing 2. In order to allow the switching of the Faraday cage from the previously-mentioned shielded and non-shielded configurations, the support plate 63 comprises an opening and a body 69, movable with respect to said opening between a first position, wherein it occludes the opening, and a second position, wherein said opening is clear. When the movable body 69 occludes the opening, the Faraday cage is in the shielded position, while, when the movable body 69 lets the opening clear, the Faraday cage is in a non-shielded position. Advantageously, the transmission 62 is connected to the movable body 69, so as to move the latter between the two above-mentioned positions. For example, the movable body 69 may be pushed towards the closed position by springs, and the transmission 62 may be connected to a mechanism 70 adapted to move, for particular angular positions of the single actuator, the movable body 69 into the opening position. According to this variant, device 1 is at the same time suitable to be used with *keyless* keys as well as with keys provided with opening/closing pushbuttons. In case of *keyless* keys, it is possible, for example, to use an internal housing 11 without the previously-mentioned pivots 66 and 67, with no need for further changes to the device, which is therefore practically universal, i.e. adaptable to keys equipped with any kind of remote control.

Still referring to figures 15a-15d, according to a further possible variant, transmission 62 is also connected to a further mechanism 71 linked to the lock 5, so that, at some angular positions of the single actuator, the lock 5 is opened or closed.

The actuation system, according to the possible above-described embodiments, may therefore simultaneously act on the lock 5, on the Faraday cage and on the leverage mechanism. It is then necessary to configure the transmission to correlate specific statuses of the lock, of the Faraday cage and of the leverage mechanism to specific angular positions of the actuation system, in particular of the single actuator.

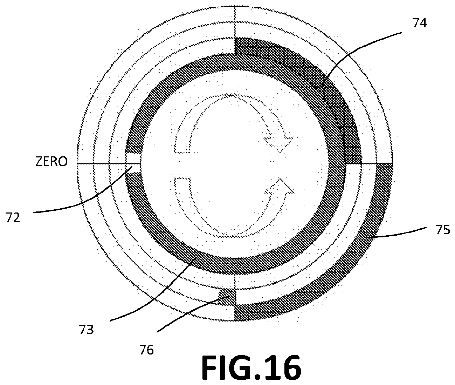

Figure 16 shows a possible diagram of such correlation. With reference to said figure 16, ZERO indicates a conventional origin. The portion 72 indicates an angular range in the neighbourhood of 0°, wherein no processes take place. The sector 73 indicates the opening condition of the Faraday cage, always preferably open except at the portion 72. The sector 74 indicates the actuation phase on the opening pushbutton, while the sector 75 indicates the actuation phase on the closing pushbutton. Finally, the sector 76 indicates the moment when the lock is authorized to open.

Safety device 1 comprises a command and control unit 17 configured to command the opening and closing of the lock 5, as well as the actuation system 6 - if any - so that this actuates the opening 103 and closing 104 pushbuttons, or the Faraday cage - if any - so that said cage switches between the shielded and non-shielded configurations.

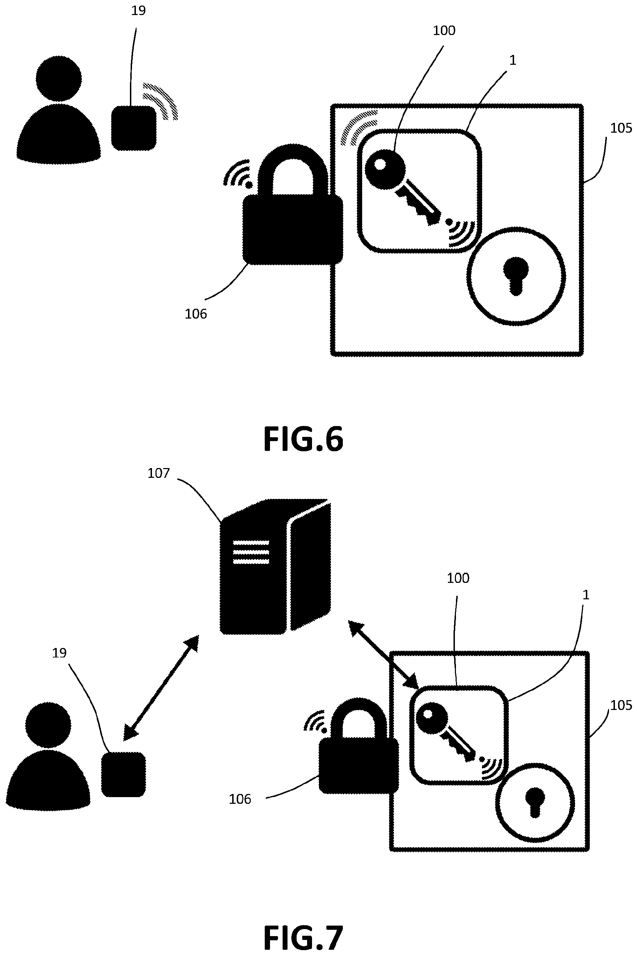

Safety device 1 further comprises a transmission unit 18 connected to the command and control unit 17, suitable for receiving command signals from an external command device 19, itself equipped with its own transmission unit. The transmission unit 18 may be long-range (for example, based on GPRS, UMTS, LTE technology) and/or short-range (by way of example, based on WI-FI, BLUETOOTH, NFC technology). By way of example, with reference to Figure 6, the external command device 19 may for example be a portable device, such as a smartphone or a tablet, via which the user may communicate with safety device 1, sending it command signals. In particular, the external command device 19 may communicate with the transmission unit 18 of safety device 1 wirelessly, as previously stated, or alternatively via a remote management system (server 107, see figure 7) that filters and transmits the requests of the external command device 19 to safety device 1, for example by means of GPRS protocol.

With reference to the example of the car start up key equipped with a remote control, when safety device 1, with the key 100 inside, is placed in the vehicle (referred to as 105 in Figure 6) in its closed configuration, the user, for example by his own smartphone 19, may send an unlock command signal to device 1, and consequently the command and control unit 17 will command the actuation system 6 for pressing the opening pushbutton 103 of the key 100 (and/or the Faraday cage 30 so that said cage switches into the non-shielded configuration), thereby opening the vehicle 105 lock 106. The command and control unit 17 will also command the lock 5 of safety device 1 in order that this switches into the open status, allowing then the user to access to the key 100 inside the external housing 2 of safety device 1. After using vehicle 105, the user may put again the key into safety device 1, close the external housing 2, get out of the vehicle, and, via his external command device 19, for example his own smartphone, send a lock command signal to safety device 1, in order that the command and control unit 17 commands the lock 5, so that it switches into the closed status, as well as the actuation system 6, so that said system presses the closing pushbutton 104 (and/or the Faraday cage 30 so that it switches into the shielded configuration), thereby closing again the lock 106 of the vehicle 105.

In order to ensure that only authorized users may send command signals to safety device 1, a special encrypted authorization program is advantageously loaded on the external command device 19 and/or on the server 107, that filters and transmits the requests, and/or on safety device 1 itself.

With reference to long-range communications between safety device 1 and the server 107, they can be encrypted, for example, with end-to-end encryption systems with mutual authentication.

With reference to short-range communications between the external command device 19 and safety device 1, the identification may be made using passwords, *Secure Hash Algorithm* or hardware key, i.e. a key exclusively supplied to the user, which should be inserted in the external command device 19 for its identification.

In addition, the encryption between the external command device 19 and safety device 1 can take advantage of the so-called *Rolling Code* technique. According to this method, safety device 1, for example via internet connection, receives from the server 107 a list of codes that enable communication between safety device 1 and the external command device 19. When the identified user wants to send command signals to safety device 1 by the external command device 19, the latter in turn connects itself to the server 107, downloading the above-mentioned codes. At this stage, the communication between the external command device 19 and safety device 1 is authorized through said codes.

Safety device 1 preferably comprises one or more batteries 20 for the power supply of its electrical, electro-activated or electro-controlled parts, in particular of the lock 5, of the actuation system 6 (if provided), of the Faraday cage 30 (if provided), of the transmission unit 18 and of the command and control unit 17. The battery 20 is preferably rechargeable and advantageously, for this purpose, device 1 comprises an input to connect a charger, which may for example be connected to the socket (by way of example, the vehicle cigarette lighter or a wall socket). According to a possible embodiment, the command and control unit 17 is configured so as to measure and/or estimate the battery charge and to send (light or sound) alerts when the battery reaches a charge level lower than a predefined threshold value.

According to a possible embodiment, device 1 is configured to exchange data, related to the use of safety device 1 itself, with the server 107. For example, said data may include the command history given to safety device 1 and the identity of the user who generated it.

In accordance with one embodiment, the command and control unit 17 is configured in such a way as to detect any possible tampering with safety device 1, such as for example attempts to open the external housing 2 by forcing the lock 5 without a previous unlock command from an authorized user.

For this purpose, safety device 1 may for example comprise one or more accelerometers and/or gyroscopes and/or magnetometers and/or absolute and/or relative position sensors, suitable for identifying movements of device 1 without a previous unlock command by an authorized user. Since in general safety device 1, when holding key 100, is kept within a protected environment, such as a stationary vehicle, any accelerations and/or rotational movements and/or general movements may indicate a tampering attempt.

Safety device 1 may further comprise a camera connected to the command and control unit 17, so that the command and control unit 17 sends an activation signal to the camera and said camera takes a photo, if a tampering attempt has been detected, for example by means of the above-mentioned accelerometers and/or gyroscopes and/or absolute and/or relative position sensors. The photo may for example be transmitted to the server 107, which files the picture taken by the safety device. Said picture may then be processed and analysed to identify for example the potential burglar.

In accordance with one embodiment, device 1 comprises a buzzer connected to the command and control unit 17, configured for sending a sound signal, if the command and control unit 17 itself detects a tampering attempt with the safety device, through the above-explained methods.

According to a further variant of the invention, safety device 1, instead of being portable, can be integrated in the protected environment, whose key it should hold. For example, referring to a car, the external housing of the safety device may be fully or partially integrated in a portion of the vehicle itself, for example in its dashboard or in its boot, or in one of its glove compartments.

By way of example, according to this variant, the open configuration of the safety device may be achieved when a drawer comes out or a door opens, if they are integrated into the vehicle portion. The closed configuration will be obtained when said drawer enters again or when said door closes.

In this way, not only safety device 1 may be used on an existing vehicle (*aftermarket*), but it may also be manufactured by an OEM (*Original equipment manufacturer*) to be integrated in the vehicle itself from the very beginning.

On the other hand, referring for example to *home sharing*, the external housing may for example be configured as a box, provided with an opening and closing door following the above-described methods. The box may, for example, be outside the house in order to grant secure sharing of keys among a plurality of people.

The skilled person, in order to satisfy specific contingent requirements, may make numerous additions, modifications or replacements of elements with others functionally equivalent to the described embodiments of the safety device according to the invention, without however departing from the scope of the appended claims.

## Claims

1. Safety device (1) for holding and sharing among a plurality of users a key (100) provided with a remote control (102) having an opening pushbutton (103) and a closing pushbutton (104), said safety device (1) comprising:
- an external housing (2) adapted to internally contain said key (100), configurable according to an open configuration and a closed configuration;
- a lock (5) that can be commanded for switching between a closed status, that prevents said external housing (2) in the closed configuration from switching into the open configuration, and an open status, that enables the external housing (2) to switch between the open and the closed configurations;
- means for interacting with said remote control (102) of the key (100), comprising an actuation system (6) fixedly linked to the external housing (2), that can be commanded to actuate said opening (103) and closing (104) pushbuttons of the remote control (102) when the key (100) is held inside the external housing (2) in the closed configuration;
- a transmission unit (18) configured to receive, directly or via an external server (107), command signals from an external command device (19), supplied to one user of said plurality of users, comprising its own transmission unit;
- a command and control unit (17) connected to said transmission unit (18) of safety device (1), configured for commanding said lock (5) and said actuation system (6) in response to the command signals;
- a leverage mechanism (9) such that said actuation system (6) acts on said opening (103) and closing (104) pushbuttons of the key (100) by means of said leverage mechanism (9), wherein said leverage mechanism (9) is linked to the external housing (2),
wherein said actuation system (6) comprises a single actuator (40), fixedly positioned with respect to the external housing (2), which rotates an actuator shaft (41), wherein the leverage mechanism (9) comprises a rotating shaft (42), set in a fixed position with respect to the external housing (2) and parallel to the actuator shaft (41), a first leverage (43) and a second leverage (44), rotating around the rotating shaft (42) and sliding along the same, wherein the first (43) and the second (44) leverages comprise: racks (45, 46,) which engage, on two opposite sides, a cogged portion of the actuator shaft (41), transverse portions (47,48) set between the actuator shaft (41) and the rotating shaft (42), and touch probes (49, 50) sliding with respect to the transverse portions (47, 48).

2. Safety device (1) for holding and sharing among a plurality of users a key (100) provided with a remote control (102) having an opening pushbutton (103) and a closing pushbutton (104), said safety device (1) comprising:
- an external housing (2) adapted to internally contain said key (100), configurable according to an open configuration and a closed configuration;
- a lock (5) that can be commanded for switching between a closed status, that prevents said external housing (2) in the closed configuration from switching into the open configuration, and an open status, that enables the external housing (2) to switch between the open and the closed configurations;
- means for interacting with said remote control (102) of the key (100) comprising an actuation system (6), that can be commanded to actuate said opening (103) and closing (104) pushbuttons of the remote control (102) when the key (100) is held inside the external housing (2) in the closed configuration;
- a transmission unit (18) configured to receive, directly or via an external server (107), command signals from an external command device (19), supplied to one user of said plurality of users, comprising its own transmission unit;
- a command and control unit (17) connected to said transmission unit (18) of safety device (1), configured for commanding said lock (5) and said actuation system (6) in response to the command signals,
wherein said actuation system (6) is configured for acting directly on said opening (103) and closing (104) pushbuttons of the key (100),
wherein said actuation system (6) is removably linked to the external housing (2) in such a way that its fixed position with respect to the latter can be changed,
wherein the actuation system (6) comprises a first (7) and a second (8) actuators removably linked to a support structure (52), fixedly linked to the external housing (2), wherein said support structure (52) comprises two opposite uprights (53), provided with first notches (54), and two crosspieces (55), provided with second notches (56), the two crosspieces (55) being connectable to the two uprights (53) in correspondence to the different positions defined by the first notches (54), the first (7) and the second (8) actuators being each connectable to one of the two crosspieces (55) in correspondence to the positions defined by the second notches (56).

3. Safety device (1) for holding and sharing among a plurality of users a key (100) provided with a remote control (102) having an opening pushbutton (103) and a closing pushbutton (104), said safety device (1) comprising:
- an external housing (2) adapted to internally contain said key (100), configurable according to an open configuration and a closed configuration;
- a lock (5) that can be commanded for switching between a closed status, that prevents said external housing (2) in the closed configuration from switching into the open configuration, and an open status, that enables the external housing (2) to switch between the open and the closed configurations;
- means for interacting with said remote control (102) of the key (100) comprising an actuation system (6) fixedly linked to the external housing (2), that can be commanded to actuate said opening (103) and closing (104) pushbuttons of the remote control (102) when the key (100) is held inside the external housing (2) in the closed configuration;
- a transmission unit (18) configured to receive, directly or via an external server (107), command signals from an external command device (19), supplied to one user of said plurality of users, comprising its own transmission unit;
- a command and control unit (17) connected to said transmission unit (18) of safety device (1), configured for commanding said lock (5) and said actuation system (6) in response to the command signals;
- a leverage mechanism (9) such that said actuation system (6) acts on said opening (103) and closing (104) pushbuttons of the key (100) by means of said leverage mechanism (9);
- an internal housing (11) adapted to hold the key and removable from said external housing (2), wherein said leverage mechanism (9) is placed in said internal housing (11),
wherein said actuation system (6) comprises a single actuator and a transmission (62) fixedly arranged on a support plate (63), fixedly linked to the external housing (2) or to a portion of it, wherein said transmission (62) is linked to a cam (68) capable of interacting with a first palette (65) and with a second palette (66) linked in a rotating manner with respect to the support plate (63) depending on the direction of rotation of the single actuator, wherein said internal housing (11) comprises a first (66) and a second (67) pivots, respectively moved by the first (64) and the second (65) palettes and positioned to act on the key (100) opening and closing pushbuttons.

4. Safety device (1) according to any of claims 1-3, suitable to hold and share among a plurality of users a key (100) provided with a remote control (102) configured for proximity detection, wherein said means for interacting with the remote control (102) comprise a Faraday cage (30) adapted to contain said key (100), wherein the Faraday cage (30) is configurable according to a shielded configuration and a non-shielded configuration, wherein the command and control unit is configured for controlling said Faraday cage (30) in response to command signals.

5. Safety device (1) according to claim 4, wherein the lock (5), the Faraday cage (30) and the leverage mechanism (9) are commanded by said actuation system (6).

6. Safety device (1) according to claims 3 and 4 or according to claims 3 and 5, wherein the support plate (63) implements said Faraday cage and comprises an opening and a body (69) which can be moved, with respect to said opening, between a first position, wherein the movable body (69) obstructs the opening, and a second position, wherein the movable body (69) leaves such opening clear, said first position corresponding to the shielded configuration of the Faraday cage, and said second position corresponding to the non-shielded configuration of the Faraday cage, wherein said single actuator moves the movable body (69) .

7. Safety device (1) according to claims 5 and 6, wherein said single actuator moves said lock (5).

8. Safety device (1) according to claim 4 or 5, comprising a first hollow body (31) adapted to hold the key (100) and having at least one opening (32) for accessing to the key, and a second body (33), movable with respect to the first body (31), wherein said first (31) and second (33) bodies comprise portions of the Faraday cage (30), said second body (33) being movable between a closing position, wherein it obstructs the opening (32) of the first body (31), and an opening position, wherein it leaves the first body (31) opening (32) clear, the opening position of the second body (33) corresponding to the non-shielded configuration of the Faraday cage (30), and the closing position of the second body (33) corresponding to the shielded configuration of the Faraday cage (30).

9. Safety device (1) according to any of the preceding claims, wherein the command and control unit (17) is configured in such a way as to detect an attempt of tampering with safety device (1) in the absence of a previous command signal to unlock safety device (1) from the external command device (19)

10. Safety device (1) according to the preceding claim, comprising one or more accelerometers and/or gyroscopes and/or magnetometers and/or absolute and/or relative position sensors connected to the command and control unit, such command and control unit (17) being configured to detect an attempt to tamper with safety device (1) if said one or more accelerometers and/or gyroscopes and/or magnetometers and/or absolute and/or relative position sensors detect movements in the absence of a previous command signal to unlock safety device (1) from the external command device (19).

11. A safety device (1) according to claim 9 or 10, comprising a camera connected to the command and control unit (17), wherein said command and control unit (17) is configured in such a way that the camera takes a photo, if the command and control unit (17) has detected an attempt to tamper with safety device (1).

12. Safety device (1) according to any of the claims from 9 to 11, comprising a buzzer connected with the command and control unit (17), wherein said command and control unit (17) is configured in such a way as to command the buzzer, in order that this emits a sound signal when the command and control unit (17) has detected an attempt to tamper with safety device (1).

13. Safety device (1) according to any of the preceding claims, wherein said command and control unit (17) is configured for exchanging data with said external server (107), such data relating to the use of safety device (1) itself.

14. System for holding and sharing among a plurality of users a key (100), said system comprising a safety device (1), according to any of the preceding claims, and a plurality of external command devices (19) supplied to said users, each external command device (19) comprising a transmission unit configured for sending command signals to said transmission unit (18) of safety device (1) directly or via an external server (107), wherein said external command device (19) or said external server (107) is configured to perform a user identification and send said command signals to safety device (1), only once the user has been identified.

15. System according to the preceding claim, wherein a cryptographic authorization program is loaded on the external command device (19) and/or on the external server (107) and/or on the safety device (1) itself.

16. Vehicle comprising a safety device (1) according to any of the claims from 1 to 13, wherein said external housing (2) is at least partially implemented by a portion of said vehicle.

## Patentansprüche

1. Sicherheitsvorrichtung (1) zum Halten und gemeinsamen Nutzen eines Schlüssels (100) unter mehreren Benutzern, der mit einer Fernsteuerung (102) versehen ist, die einen Öffnungsdruckknopf (103) und einen Schließdruckknopf (104) aufweist, wobei die Sicherheitsvorrichtung (1) Folgendes umfasst:
- ein externes Gehäuse (2), das angepasst ist, um den Schlüssel (100) intern zu enthalten, das gemäß einer offenen Konfiguration und einer geschlossenen Konfiguration konfigurierbar ist;
- eine Verriegelung (5), die angewiesen werden kann, zwischen einem geschlossenen Zustand, der verhindert, dass das externe Gehäuse (2) in der geschlossenen Konfiguration in die offene Konfiguration umschaltet, und einem offenen Zustand umzuschalten, der ermöglicht, dass das externe Gehäuse (2) zwischen der offenen und der geschlossenen Konfiguration umschaltet;
- Mittel zum Zusammenwirken mit der Fernsteuerung (102) des Schlüssels (100), die ein Betätigungssystem (6) umfassen, das mit dem externen Gehäuse (2) fest verknüpft ist und das angewiesen werden kann, den Öffnungs- (103) und den Schließ- (104) Druckknopf der Fernsteuerung (102) zu betätigen, wenn der Schlüssel (100) in der geschlossenen Konfiguration innerhalb des externen Gehäuses (2) gehalten wird;
- eine Übertragungseinheit (18), die konfiguriert ist, um direkt oder über einen externen Server (107) Anweisungssignale von einer externen Anweisungsvorrichtung (19) zu empfangen, die einem Benutzer der mehreren Benutzer zur Verfügung gestellt wird, die ihre eigene Übertragungseinheit umfasst;
- eine Anweisungs- und Steuereinheit (17), die mit der Übertragungseinheit (18) der Sicherheitsvorrichtung (1) verbunden ist, die zum Anweisen der Verriegelung (5) und des Betätigungssystems (6) als Reaktion auf die Anweisungssignale konfiguriert ist;
- einen Hebelmechanismus (9) derart, dass das Betätigungssystem (6) auf die Öffnungs- (103) und Schließ- (104) Druckknöpfe des Schlüssels (100) mittels des Hebelmechanismus (9) wirkt, wobei der Hebelmechanismus (9) mit dem externen Gehäuse (2) verknüpft ist,
wobei das Betätigungssystem (6) ein einzelnes Betätigungselement (40) umfasst, das in Bezug auf das externe Gehäuse (2) fest positioniert ist, das eine Betätigungswelle (41) dreht, wobei der Hebelmechanismus (9) eine sich drehende Welle (42), die in einer festen Position in Bezug auf das externe Gehäuse (2) und parallel zu der Betätigungswelle (41) eingestellt ist, einen ersten Hebel (43) und einen zweiten Hebel (44) umfasst, die sich um die sich drehende Welle (42) drehen und entlang derselben gleiten, wobei der erste (43) und der zweite (44) Hebel Folgendes umfassen:
Zahnstangen (45, 46,), die an zwei gegenüberliegenden Seiten einen gezahnten Abschnitt der Betätigungswelle (41) ein Eingriff nehmen, transversale Abschnitte (47, 48), eingestellt zwischen der Betätigungswelle (41) und der sich drehenden Welle (42), und Berührungssensoren (49, 50), die in Bezug auf die Querabschnitte (47, 48) gleiten.

2. Sicherheitsvorrichtung (1) zum Halten und gemeinsamen Nutzen eines Schlüssels (100) unter mehreren Benutzern, der mit einer Fernsteuerung (102) versehen ist, die einen Öffnungsdruckknopf (103) und einen Schließdruckknopf (104) aufweist, wobei die Sicherheitsvorrichtung (1) Folgendes umfasst:
- ein externes Gehäuse (2), das angepasst ist, um den Schlüssel (100) intern zu enthalten, das gemäß einer offenen Konfiguration und einer geschlossenen Konfiguration konfigurierbar ist;
- eine Verriegelung (5), die angewiesen werden kann, zwischen einem geschlossenen Zustand, der verhindert, dass das externe Gehäuse (2) in der geschlossenen Konfiguration in die offene Konfiguration umschaltet, und einem offenen Zustand umzuschalten, der ermöglicht, dass das externe Gehäuse (2) zwischen der offenen und der geschlossenen Konfiguration umschaltet;
- Mittel zum Zusammenwirken mit der Fernsteuerung (102) des Schlüssels (100), die ein Betätigungssystem (6) umfassen, das angewiesen werden kann, die Öffnungs-(103) und die Schließ- (104) Druckknöpfe der Fernsteuerung (102) zu betätigen, wenn der Schlüssel (100) in der geschlossenen Konfiguration innerhalb des externen Gehäuses (2) gehalten wird;
- eine Übertragungseinheit (18), die konfiguriert ist, um direkt oder über einen externen Server (107) Anweisungssignale von einer externen Anweisungsvorrichtung (19) zu empfangen, die einem Benutzer der mehreren Benutzer zur Verfügung gestellt wird, die ihre eigene Übertragungseinheit umfasst;
- eine Anweisungs- und Steuereinheit (17), die mit der Übertragungseinheit (18) der Sicherheitsvorrichtung (1) verbunden ist, die zum Anweisen der Verriegelung (5) und des Betätigungssystems (6) als Reaktion auf die Anweisungssignale konfiguriert ist;
wobei das Betätigungssystem (6) konfiguriert ist, um direkt auf die Öffnungs- (103) und die Schließ- (104) Druckknöpfe des Schlüssels (100) zu wirken,
wobei das Betätigungssystem (6) auf eine Weise mit dem externen Gehäuse (2) entfernbar verknüpft ist, dass seine feste Position in Bezug auf letzteres geändert werden kann,
wobei das Betätigungssystem (6) ein erstes (7) und ein zweites (8) Betätigungselement umfasst, die mit einer Stützstruktur (52) entfernbar verknüpft sind, die mit dem externen Gehäuse (2) fest verknüpft ist, wobei die Stützstruktur (52) zwei gegenüberliegende Pfosten (53), die mit ersten Kerben (54) versehen sind, und zwei Querstücke (55) umfasst, die mit zweiten Kerben (56) versehen sind, wobei die zwei Querstücke (55) mit den zwei Pfosten (53) entsprechend den verschiedenen Positionen, definiert durch die ersten Kerben (54), verbindbar sind, wobei das erste (7) und das zweite (8) Betätigungselement jeweils mit einem der zwei Querstücke (55) entsprechend den Positionen verbindbar sind, die durch die zweiten Kerben (56) definiert sind.

3. Sicherheitsvorrichtung (1) zum Halten und gemeinsamen Nutzen eines Schlüssels (100) unter mehreren Benutzern, der mit einer Fernsteuerung (102) versehen ist, die einen Öffnungsdruckknopf (103) und einen Schließdruckknopf (104) aufweist, wobei die Sicherheitsvorrichtung (1) Folgendes umfasst:
- ein externes Gehäuse (2), das angepasst ist, um den Schlüssel (100) intern zu enthalten, das gemäß einer offenen Konfiguration und einer geschlossenen Konfiguration konfigurierbar ist;
- eine Verriegelung (5), die angewiesen werden kann, zwischen einem geschlossenen Zustand, der verhindert, dass das externe Gehäuse (2) in der geschlossenen Konfiguration in die offene Konfiguration umschaltet, und einem offenen Zustand umzuschalten, der ermöglicht, dass das externe Gehäuse (2) zwischen der offenen und der geschlossenen Konfiguration umschaltet;
- Mittel zum Zusammenwirken mit der Fernsteuerung (102) des Schlüssels (100), die ein Betätigungssystem (6) umfassen, das mit dem externen Gehäuse (2) fest verknüpft ist und das angewiesen werden kann, den Öffnungs- (103) und den Schließ- (104) Druckknopf der Fernsteuerung (102) zu betätigen, wenn der Schlüssel (100) in der geschlossenen Konfiguration innerhalb des externen Gehäuses (2) gehalten wird;
- eine Übertragungseinheit (18), die konfiguriert ist, um direkt oder über einen externen Server (107) Anweisungssignale von einer externen Anweisungsvorrichtung (19) zu empfangen, die einem Benutzer der mehreren Benutzer zur Verfügung gestellt wird, die ihre eigene Übertragungseinheit umfasst;
- eine Anweisungs- und Steuereinheit (17), die mit der Übertragungseinheit (18) der Sicherheitsvorrichtung (1) verbunden ist, die zum Anweisen der Verriegelung (5) und des Betätigungssystems (6) als Reaktion auf die Anweisungssignale konfiguriert ist;
- einen Hebelmechanismus (9) derart, dass das Betätigungssystem (6) auf die Öffnungs- (103) und Schließ- (104) Druckknöpfe des Schlüssels (100) mittels des Hebelmechanismus (9) wirkt;
- ein internes Gehäuse (11), das angepasst ist, um den Schlüssel zu halten und von dem externen Gehäuse (2) entfernbar ist, wobei der Hebelmechanismus (9) in dem inneren Gehäuse (11) platziert ist,
wobei das Betätigungssystem (6) ein einzelnes Betätigungselement und eine Übertragung (62) umfasst, die fest auf einer Stützplatte (63) angeordnet sind, die mit dem äußeren Gehäuse (2) oder mit einem Abschnitt davon fest verknüpft ist, wobei die Übertragung (62) mit einem Nocken (68) verknüpft ist, der in der Lage ist, mit einer ersten Palette (65) und mit einer zweiten Palette (66) zusammenzuwirken, die in Bezug auf die Stützplatte (63) in Abhängigkeit von der Drehrichtung des einzelnen Betätigungselements auf eine drehbare Weise verknüpft sind, wobei das innere Gehäuse (11) ein erstes (66) und ein zweites (67) Gelenk umfasst, die jeweils durch die erste (64) und die zweite (65) Palette bewegt werden und positioniert sind, um auf die Schlüsselöffnungs- und Schließdruckknöpfe (100) zu wirken.

4. Sicherheitsvorrichtung (1) nach einem der Ansprüche 1-3, die geeignet ist, einen Schlüssel (100) zu halten und unter mehreren Benutzern gemeinsam zu nutzen, der mit einer Fernsteuerung (102) versehen ist, die für eine Näherungserfassung konfiguriert ist, wobei die Mittel zum Zusammenwirken mit der Fernsteuerung (102) einen Faraday-Käfig (30) umfassen, der angepasst ist, um den Schlüssel (100) zu enthalten, wobei der Faraday-Käfig (30) gemäß einer abgeschirmten Konfiguration und einer nicht abgeschirmten Konfiguration konfigurierbar ist, wobei die Anweisungs- und Steuereinheit zum Steuern des Faraday-Käfigs (30) als Reaktion auf Anweisungssignale konfiguriert ist.

5. Sicherheitsvorrichtung (1) nach Anspruch 4, wobei die Verriegelung (5), der Faraday-Käfig (30) und der Hebelmechanismus (9) durch das Betätigungssystem (6) angewiesen werden.

6. Sicherheitsvorrichtung (1) nach den Ansprüchen 3 und 4 oder nach den Ansprüchen 3 und 5, wobei die Stützplatte (63) den Faraday-Käfig implementiert und eine Öffnung und einen Körper (69) umfasst, der in Bezug auf die Öffnung zwischen einer ersten Position, in der der bewegbare Körper (69) die Öffnung blockiert, und einer zweiten Position bewegt werden kann, in der der bewegbare Körper (69) eine solche Öffnung frei lässt, wobei die erste Position der abgeschirmten Konfiguration des Faraday-Käfigs entspricht und die zweite Position der nicht abgeschirmten Konfiguration des Faraday-Käfigs entspricht, wobei das einzelne Betätigungselement den bewegbaren Körper (69) bewegt.

7. Sicherheitsvorrichtung (1) nach den Ansprüchen 5 und 6, wobei das einzelne Betätigungselement die Verriegelung (5) bewegt.

8. Sicherheitsvorrichtung (1) nach Anspruch 4 oder 5, die einen ersten Hohlkörper (31), der angepasst ist, um den Schlüssel (100) zu halten und wenigstens eine Öffnung (32) zum Zugreifen auf den Schlüssel aufweist, und einen zweiten Körper (33) umfasst, der in Bezug auf den ersten Körper (31) bewegbar ist, wobei der erste (31) und der zweite (33) Körper Abschnitte des Faraday-Käfigs (30) umfassen, wobei der zweite Körper (33) zwischen einer schließenden Position, in der er die Öffnung (32) des ersten Körpers (31) blockiert, und einer öffnenden Position bewegbar ist, in der er die Öffnung (32) des ersten Körpers (31) frei lässt, wobei die öffnende Position des zweiten Körpers (33) der nicht abgeschirmten Konfiguration des Faraday-Käfigs (30) entspricht und die schließende Position des zweiten Körpers (33) der abgeschirmten Konfiguration des Faraday-Käfigs (30) entspricht.

9. Sicherheitsvorrichtung (1) nach einem der vorhergehenden Ansprüche, wobei die Anweisungs- und Steuereinheit (17) auf eine Weise konfiguriert ist, dass ein Versuch eines Manipulierens an der Sicherheitsvorrichtung (1) in der Abwesenheit eines vorherigen Anweisungssignals erfasst wird, um die Sicherheitsvorrichtung (1) von der externen Anweisungsvorrichtung (19) zu entriegeln.

10. Sicherheitsvorrichtung (1) nach dem vorhergehenden Anspruch, die einen oder mehrere Beschleunigungsmesser und/oder Gyroskope und/oder Magnetometer und/oder absolute und/oder relative Positionssensoren umfasst, die mit der Anweisungs- und Steuereinheit verbunden sind, wobei eine solche Anweisungs- und Steuereinheit (17) konfiguriert ist, um einen Versuch, die Sicherheitsvorrichtung (1) zu manipulieren, wenn der eine oder die mehreren Beschleunigungsmesser und/oder Gyroskope und/oder Magnetometer und/oder absolute und/oder relative Positionssensoren Bewegungen in der Abwesenheit eines vorherigen Anweisungssignals zum Entsperren der Sicherheitsvorrichtung (1) von der externen Anweisungsvorrichtung (19) erfassen.

11. Sicherheitsvorrichtung (1) nach Anspruch 9 oder 10, die eine Kamera umfasst, die mit der Anweisungs- und Steuereinheit (17) verbunden ist, wobei die Anweisungs- und Steuereinheit (17) auf eine Weise konfiguriert ist, dass die Kamera ein Foto macht, falls die Anweisungs- und Steuereinheit (17) einen Versuch, die Sicherheitsvorrichtung (1) zu manipulieren, erfasst hat.

12. Sicherheitsvorrichtung (1) nach einem der Ansprüche 9 bis 11, die einen Summer umfasst, der mit der Anweisungs- und Steuereinheit (17) verbunden ist, wobei die Anweisungs- und Steuereinheit (17) auf eine Weise konfiguriert ist, um den Summer anzuweisen, damit dieser ein Tonsignal aussendet, wenn die Anweisungs- und Steuereinheit (17) einen Versuch, die Sicherheitsvorrichtung (1) zu manipulieren, erfasst hat.

13. Sicherheitsvorrichtung (1) nach einem der vorhergehenden Ansprüche, wobei die Anweisungs- und Steuereinheit (17) zum Austauschen von Daten mit dem externen Server (107) konfiguriert ist, wobei sich diese Daten auf die Verwendung der Sicherheitsvorrichtung (1) selbst beziehen.

14. System zum Halten und gemeinsamen Nutzen, unter mehreren Benutzern, eines Schlüssels (100), wobei das System eine Sicherheitsvorrichtung (1) nach einem der vorhergehenden Ansprüche und mehrere externe Anweisungsvorrichtungen (19) umfasst, die den Benutzern zur Verfügung gestellt werden, wobei jede externe Anweisungsvorrichtung (19) eine Übertragungseinheit umfasst, die konfiguriert ist, um Anweisungssignale direkt oder über einen externen Server (107) an die Übertragungseinheit (18) der Sicherheitsvorrichtung (1) zu senden, wobei die externe Anweisungsvorrichtung (19) oder der externe Server (107) konfiguriert ist, um eine Benutzeridentifikation durchzuführen und die Anweisungssignale nur dann an die Sicherheitsvorrichtung (1) zu senden, wenn der Benutzer identifiziert wurde.

15. System nach dem vorhergehenden Anspruch, wobei ein kryptografisches Autorisierungsprogramm auf die externe Anweisungsvorrichtung (19) und/oder auf den externen Server (107) und/oder auf die Sicherheitsvorrichtung (1) selbst geladen wird.

16. Fahrzeug, das eine Sicherheitsvorrichtung (1) nach einem der Ansprüche 1 bis 13 umfasst, wobei das externe Gehäuse (2) wenigstens teilweise durch einen Abschnitt des Fahrzeugs implementiert ist.

## Revendications

1. Dispositif de sécurité (1) permettant de contenir et de partager, entre une pluralité d'utilisateurs, une clé (100) dotée d'une télécommande (102) ayant un bouton-poussoir d'ouverture (103) et un bouton-poussoir de fermeture (104), ledit dispositif de sécurité (1) comprenant :
- un boîtier externe (2) adapté pour contenir intérieurement ladite clé (100), configurable selon une configuration ouverte et une configuration fermée ;
- un verrou (5) qui peut être commandé pour basculer entre un état fermé, qui empêche ledit boîtier externe (2) dans la configuration fermée de basculer dans la configuration ouverte, et un état ouvert, qui permet au boîtier externe (2) de basculer entre les configurations ouverte et fermée ;
- des moyens pour interagir avec ladite télécommande (102) de la clé (100), comprenant un système d'actionnement (6) relié de manière fixe au boîtier externe (2), qui peut être commandé pour actionner lesdits boutons-poussoirs d'ouverture (103) et de fermeture (104) de la télécommande (102) lorsque la clé (100) est maintenue à l'intérieur du boîtier externe (2) en configuration fermée ;
- une unité de transmission (18) configurée pour recevoir, directement ou par l'intermédiaire d'un serveur externe (107), des signaux de commande d'un dispositif de commande externe (19), fournis à un utilisateur de ladite pluralité d'utilisateurs, comprenant sa propre unité de transmission ;
- une unité de commande et de contrôle (17) connectée à ladite unité de transmission (18) du dispositif de sécurité (1), configurée pour commander ladite serrure (5) et ledit système d'actionnement (6) en réponse aux signaux de commande ;
- un mécanisme de levier (9) de telle sorte que ledit système d'actionnement (6) agit sur lesdits boutons-poussoirs d'ouverture (103) et de fermeture (104) de la clé (100) au moyen dudit mécanisme de levier (9), dans lequel ledit mécanisme de levier (9) est lié au boîtier extérieur (2),
dans lequel ledit système d'actionnement (6) comprend un seul actionneur (40), positionné de manière fixe par rapport au boîtier externe (2), qui fait tourner un arbre d'actionneur (41), dans lequel le mécanisme de levier (9) comprend un arbre rotatif (42), mis dans une position fixe par rapport au boîtier externe (2) et parallèle à l'arbre de l'actionneur (41), un premier effet de levier (43) et un second effet de levier (44), tournant autour de l'arbre rotatif (42) et glissant le long de celui-ci, dans lequel les premier (43) et second (44) effets de levier comprennent : des crémaillères (45, 46,) qui viennent en prise avec, sur deux côtés opposés, une partie crantée de l'arbre de l'actionneur (41), des parties transversales (47, 48) disposées entre l'arbre d'actionneur (41) et l'arbre rotatif (42), et des palpeurs tactiles (49, 50) coulissant par rapport aux parties transversales (47, 48).

2. Dispositif de sécurité (1) pour contenir et partager, entre une pluralité d'utilisateurs, une clé (100) pourvue d'une télécommande (102) ayant un bouton-poussoir d'ouverture (103) et un bouton-poussoir de fermeture (104), ledit dispositif de sécurité (1) comprenant :
- un boîtier externe (2) adapté pour contenir intérieurement ladite clé (100), configurable selon une configuration ouverte et une configuration fermée ;
- un verrou (5) qui peut être commandé pour basculer entre un état fermé, qui empêche ledit boîtier externe (2) dans la configuration fermée de basculer dans la configuration ouverte, et un état ouvert, qui permet au boîtier externe (2) de basculer entre les configurations ouverte et fermée ;
- des moyens pour interagir avec ladite télécommande (102) de la clé (100) comprenant un système d'actionnement (6), qui peut être commandé pour actionner lesdits boutons-poussoirs d'ouverture (103) et de fermeture (104) de la télécommande (102) lorsque la clé (100) est maintenue à l'intérieur du boîtier externe (2) dans la configuration fermée ;
- une unité de transmission (18) configurée pour recevoir, directement ou par l'intermédiaire d'un serveur externe (107), des signaux de commande d'un dispositif de commande externe (19), fournis à un utilisateur de ladite pluralité d'utilisateurs, comprenant sa propre unité de transmission ;
- une unité de commande et de contrôle (17) connectée à ladite unité de transmission (18) du dispositif de sécurité (1), configurée pour commander ladite serrure (5) et ledit système d'actionnement (6) en réponse aux signaux de commande,
dans lequel ledit système d'actionnement (6) est configuré pour agir directement sur lesdits boutons-poussoirs d'ouverture (103) et de fermeture (104) de la clé (100),
dans lequel ledit système d'actionnement (6) est relié de manière amovible au boîtier externe (2) de telle sorte que sa position fixe par rapport à ce dernier peut être changée,
dans lequel le système d'actionnement (6) comprend un premier (7) et un second (8) actionneurs liés de manière amovible à une structure de support (52), liée de manière fixe au boîtier externe (2), dans lequel ladite structure de support (52) comprend deux montants opposés (53), pourvus de premières encoches (54), et deux traverses (55), pourvues de secondes encoches (56), les deux traverses (55) pouvant être reliées aux deux montants (53) en correspondance avec les différentes positions définies par les premières encoches (54), les premier (7) et second (8) actionneurs pouvant être chacun reliés à l'une des deux traverses (55) en correspondance avec les positions définies par les secondes encoches (56).

3. Dispositif de sécurité (1) pour contenir et partager, entre une pluralité d'utilisateurs, une clé (100) pourvue d'une télécommande (102) ayant un bouton-poussoir d'ouverture (103) et un bouton-poussoir de fermeture (104), ledit dispositif de sécurité (1) comprenant :
- un boîtier externe (2) adapté pour contenir intérieurement ladite clé (100), configurable selon une configuration ouverte et une configuration fermée ;
- un verrou (5) qui peut être commandé pour basculer entre un état fermé, qui empêche ledit boîtier externe (2) dans la configuration fermée de basculer dans la configuration ouverte, et un état ouvert, qui permet au boîtier externe (2) de basculer entre les configurations ouverte et fermée ;
- des moyens pour interagir avec ladite télécommande (102) de la clé (100) comprenant un système d'actionnement (6) relié de manière fixe au boîtier externe (2), qui peut être commandé pour actionner lesdits boutons-poussoirs d'ouverture (103) et de fermeture (104) de la télécommande (102) lorsque la clé (100) est maintenue à l'intérieur du boîtier externe (2) en configuration fermée ;
- une unité de transmission (18) configurée pour recevoir, directement ou par l'intermédiaire d'un serveur externe (107), des signaux de commande d'un dispositif de commande externe (19), fournis à un utilisateur de ladite pluralité d'utilisateurs, comprenant sa propre unité de transmission ;
- une unité de commande et de contrôle (17) connectée à ladite unité de transmission (18) du dispositif de sécurité (1), configurée pour commander ladite serrure (5) et ledit système d'actionnement (6) en réponse aux signaux de commande ;
- un mécanisme de levier (9) de telle sorte que ledit système d'actionnement (6) agit sur lesdits boutons-poussoirs d'ouverture (103) et de fermeture (104) de la clé (100) au moyen dudit mécanisme de levier (9) ;
- un boîtier interne (11) adapté pour contenir la clé et amovible dudit boîtier externe (2), ledit mécanisme à effet de levier (9) étant placé dans ledit boîtier interne (11),
dans lequel ledit système d'actionnement (6) comprend un actionneur unique et une transmission (62) disposés de manière fixe sur une plaque de support (63), reliée fixement au boîtier externe (2) ou à une partie de celui-ci, ladite transmission (62) étant reliée à une came (68) apte à interagir avec une première palette (65) et avec une seconde palette (66) reliée de manière rotative par rapport à la plaque de support (63) en fonction du sens de rotation de l'actionneur unique, dans lequel ledit boîtier interne (11) comprend des premier (66) et second (67) pivots, respectivement déplacés par les première (64) et seconde (65) palettes et positionnés pour agir sur les boutons-poussoirs d'ouverture et de fermeture de la clé (100).

4. Dispositif de sécurité (1) selon l'une quelconque des revendications 1 à 3, adapté pour contenir et partager, entre une pluralité d'utilisateurs, une clé (100) pourvue d'une télécommande (102) configurée pour la détection de proximité, dans lequel lesdits moyens pour interagir avec la télécommande (102) comprennent une cage de Faraday (30) adaptée pour contenir ladite clé (100), la cage de Faraday (30) étant configurable selon une configuration blindée et une configuration non blindée, l'unité de commande et de contrôle étant configurée pour la commande de ladite cage de Faraday (30) en réponse à des signaux de commande.

5. Dispositif de sécurité (1) selon la revendication 4, dans lequel le verrou (5), la cage de Faraday (30) et le mécanisme de levier (9) sont commandés par ledit système d'actionnement (6).

6. Dispositif de sécurité (1) selon les revendications 3 et 4 ou selon les revendications 3 et 5, dans lequel la plaque de support (63) met en oeuvre ladite cage de Faraday et comprend une ouverture et un corps (69) qui peut être déplacé, par rapport à ladite ouverture, entre une première position, dans laquelle le corps mobile (69) obstrue l'ouverture, et une seconde position, dans laquelle le corps mobile (69) laisse cette ouverture dégagée, ladite première position correspondant à la configuration blindée de la cage de Faraday, et ladite seconde position correspondant à la configuration non blindée de la cage de Faraday, dans laquelle ledit actionneur unique déplace le corps mobile (69).

7. Dispositif de sécurité (1) selon les revendications 5 et 6, dans lequel ledit actionneur unique déplace ledit verrou (5).

8. Dispositif de sécurité (1) selon la revendication 4 ou 5, comprenant un premier corps creux (31) adapté pour contenir la clé (100) et ayant au moins une ouverture (32) pour accéder à la clé, et un second corps (33), mobile par rapport au premier corps (31), dans lequel lesdits premier (31) et second (33) corps comprennent des parties de la cage de Faraday (30), ledit second corps (33) étant mobile entre une position de fermeture, dans laquelle il obstrue l'ouverture (32) du premier corps (31), et une position d'ouverture, dans laquelle il laisse l'ouverture (32) du premier corps (31) dégagée, la position d'ouverture du second corps (33) correspondant à la configuration non blindée de la cage de Faraday (30), et la position de fermeture du second corps (33) correspondant à la configuration blindée de la cage de Faraday (30).

9. Dispositif de sécurité (1) selon l'une quelconque des revendications précédentes, dans lequel l'unité de commande et de contrôle (17) est configurée de manière à détecter une tentative de manipulation frauduleuse du dispositif de sécurité (1) en l'absence d'un signal de commande précédent pour déverrouiller le dispositif de sécurité (1) du dispositif de commande externe (19).

10. Dispositif de sécurité (1) selon la revendication précédente, comprenant un ou plusieurs accéléromètres et/ou gyroscopes et/ou magnétomètres et/ou capteurs de position absolue et/ou relative connectés à l'unité de commande et de contrôle, cette unité de commande et de commande (17) étant configurée pour détecter une tentative de manipulation frauduleuse du dispositif de sécurité (1) si lesdits un ou plusieurs accéléromètres et/ou gyroscopes et/ou magnétomètres et/ou capteurs de position absolue et/ou relative détectent des mouvements en l'absence d'un signal de commande précédent pour déverrouiller le dispositif de sécurité (1) provenant du dispositif de commande externe (19).

11. Dispositif de sécurité (1) selon la revendication 9 ou 10, comprenant une caméra connectée à l'unité de commande et de contrôle (17), dans lequel ladite unité de commande et de commande (17) est configurée de telle sorte que la caméra prend une photo, si l'unité de commande et de contrôle (17) a détecté une tentative de manipulation frauduleuse du dispositif de sécurité (1).

12. Dispositif de sécurité (1) selon l'une quelconque des revendications 9 à 11, comprenant un avertisseur sonore connecté à l'unité de commande et de contrôle (17), dans lequel ladite unité de commande et de contrôle (17) est configurée de manière à commander l'avertisseur sonore, afin que celui-ci émette un signal sonore lorsque l'unité de commande et de contrôle (17) a détecté une tentative de manipulation frauduleuse du dispositif de sécurité (1).

13. Dispositif de sécurité (1) selon l'une quelconque des revendications précédentes, dans lequel ladite unité de commande et de contrôle (17) est configurée pour échanger des données avec ledit serveur externe (107), ces données se rapportant à l'utilisation du dispositif de sécurité (1) lui-même.

14. Système pour contenir et partager, entre une pluralité d'utilisateurs, une clé (100), ledit système comprenant un dispositif de sécurité (1), selon l'une quelconque des revendications précédentes, et une pluralité de dispositifs de commande externes (19) fournis auxdits utilisateurs, chaque dispositif de commande externe (19) comprenant une unité de transmission configurée pour envoyer des signaux de commande à ladite unité de transmission (18) du dispositif de sécurité (1) directement ou par l'intermédiaire d'un serveur externe (107), dans lequel ledit dispositif de commande externe (19) ou ledit serveur externe (107) est configuré pour effectuer une identification d'utilisateur et envoyer lesdits signaux de commande au dispositif de sécurité (1), uniquement une fois que l'utilisateur a été identifié.

15. Système selon la revendication précédente, dans lequel un programme d'autorisation cryptographique est chargé sur le dispositif de commande externe (19) et/ou sur le serveur externe (107) et/ou sur le dispositif de sécurité (1) lui-même.

16. Véhicule comprenant un dispositif de sécurité (1) selon l'une quelconque des revendications 1 à 13, dans lequel ledit boîtier externe (2) est au moins partiellement mis en oeuvre par une partie dudit véhicule.
